# FASCICULE DE BREVET EUROPEEN

(11) **EP 4 505 566 B1**
(45) Date de publication et mention de la délivrance du brevet: **21.10.2026**
(21) Numéro de dépôt: 23715154.3
(22) Date de dépôt: 30.03.2023
(51) Int. Cl.: H02J 3/00, F03D 9/25, H02J 3/38, F03D 13/25

(54) **INFRASTRUCTURE DE CONNEXION D'EOLIENNES MARINES A UN POSTE DE CONNEXION A UN RESEAU ELECTRIQUE**
INFRASTRUKTUR ZUM VERBINDEN VON OFFSHORE-WINDTURBINEN MIT EINER STROMNETZUNTERSTATION
INFRASTRUCTURE FOR CONNECTING OFFSHORE WIND TURBINES TO AN ELECTRICAL GRID SUBSTATION

(30) Priorité: 01.04.2022 FR 2202998
(43) Date de publication de la demande: 12.02.2025
(73) Titulaire: Supergrid Institute, 69100 Villeurbanne (FR)
(72) Inventeur: NAJARRE, Isabelle, 69007 LYON (FR); DALMAR, Leo, 69007 LYON (FR); HENRIKSEN, Martin, 69007 LYON (FR)
(74) Mandataire: Opilex
(86) Numéro de dépôt international: PCT/EP2023/058266
(87) Numéro de publication internationale: WO 2023/187040

(56) Documents cités:
- WO-A1-2021/180280
- GB-A- 2 586 799

## Description

L'invention concerne l'interconnexion de sources d'énergie renouvelable à des réseaux électriques, et en particulier l'interconnexion d'éoliennes marines à des réseaux électriques de distribution.

Le développement des éoliennes marines est rendu nécessaire par le besoin d'une puissance électrique croissante provenant d'énergies renouvelables. Les éoliennes se présentent sous la forme de structures flottantes supportant des pales entrainant en rotation le rotor d'une machine électrique. Du fait de la puissance limitée que peut produire chaque éolienne, les éoliennes sont organisées en des champs d'éoliennes espacées les unes des autres et interconnectées électriquement. Les éoliennes sont par ailleurs connectées à un réseau de distribution électrique par l'intermédiaire d'un poste de conversion, généralement positionné à terre ou décomposé entre un sous poste de conversion positionné à terre et un sous poste de conversion positionné en mer.

Le document EP3098820 décrit une infrastructure de connexion d'éoliennes marines entre elles ou à un poste de conversion. Les éoliennes sont connectées électriquement pour former une chaine. Chaque éolienne comporte un câble électrique sous-marin pour envoyer de la puissance électrique générée à destination du poste de conversion, éventuellement par l'intermédiaire d'une autre éolienne. Les éoliennes intermédiaires de la chaine comportent également un autre câble électrique sous-marin pour recevoir de la puissance électrique provenant d'une autre éolienne. Chaque éolienne intermédiaire de la chaine assure l'interconnexion électrique entre deux éoliennes adjacentes et avec sa machine électrique, au niveau de sa structure flottante. Le câble sous-marin reliant deux éoliennes adjacentes comporte un premier tronçon flexible s'étendant entre une structure flottante et le fond marin, un deuxième tronçon flexible s'étendant entre le fond marin et une autre structure flottante, et un troisième tronçon reposant sur le fond marin et interconnectant les premier et deuxième tronçons flexibles. Les documents WO 2021/180280 A1 et GB 2 586 799 A sont d'autres exemples d'art antérieur.

Les tronçons flexibles reliant une structure flottante au tronçon de fond doivent résister à des oscillations régulières, du fait du déplacement de la structure flottante par les courants et marées. Du fait des contraintes alternatives répétées, ces câbles subissent une fatigue importante qui induit leur surdimensionnement. Le coût de telles infrastructures est donc important.

L'invention vise à résoudre un ou plusieurs de ces inconvénients. L'invention porte ainsi sur une infrastructure de connexion d'éoliennes marines à un poste de connexion à un réseau électrique, tel que défini dans la revendication 1 annexée.

L'invention porte également sur les variantes des revendications dépendantes. L'homme du métier comprendra que chacune des caractéristiques des variantes des revendications dépendantes et de la description peut être combinée indépendamment aux caractéristiques ci-dessus, sans pour autant constituer une généralisation intermédiaire.

L'invention concerne également un procédé de gestion de défaut dans une infrastructure telle que définie précédemment.

D'autres caractéristiques et avantages de l'invention ressortiront clairement de la description qui en est faite ci-après, à titre indicatif et nullement limitatif, en référence aux dessins annexés, dans lesquels :
[Fig.1] est une représentation schématique d'une infrastructure d'interconnexion selon un exemple de mise en œuvre de l'invention.
[Fig.2] est une représentation schématique d'un élément d'interconnexion sous-marin selon un exemple d'un mode de réalisation de l'invention.

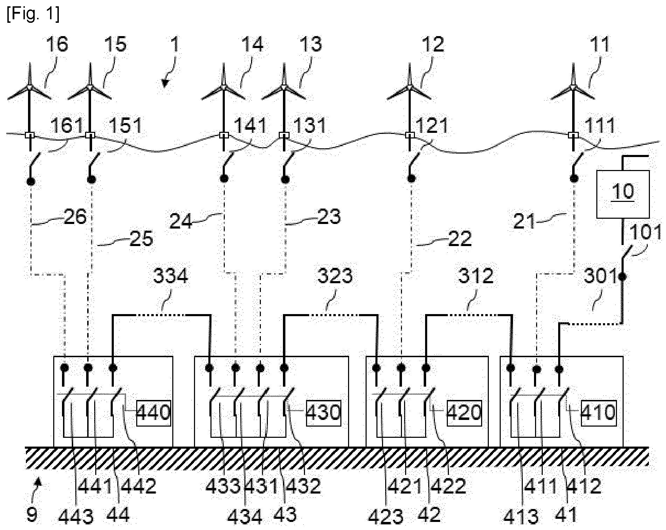

La figure 1 est une représentation schématique d'un exemple d'infrastructure 1 de connexion d'éoliennes marines selon un mode de réalisation de l'invention. L'infrastructure 1 comporte ici plusieurs éoliennes marines 11 à 16. Chaque éolienne marine 11 à 16 comporte ici de façon connue en soi un corps flottant qui la maintient à la surface d'une étendue d'eau. Chaque éolienne marine 11 à 16 comporte également une machine électrique entrainée en rotation par des pales d'éoliennes ou des turbines éoliennes. Chaque machine électrique est ainsi destinée à générer un courant électrique alternatif en présence de conditions de vent satisfaisantes. Ces éoliennes marines 11 à 16 sont destinées à fournir le courant électrique généré à un réseau électrique. L'interface avec un tel réseau électrique (par exemple un réseau électrique haute tension continue) est réalisée par un poste de connexion 10. Le poste de connexion 10 inclut ici un convertisseur alternatif/continu. Le poste de connexion 10 est typiquement positionné à proximité des éoliennes marines 11 à 16. Ce poste de connexion 10 peut par exemple comprendre une sous-station d'élévation de tension AC/AC et un une sous-station de conversion AC/DC. Lorsqu'une éolienne marine inclut un convertisseur AC/DC, le poste de connexion 10 peut inclure un convertisseur DC/DC.

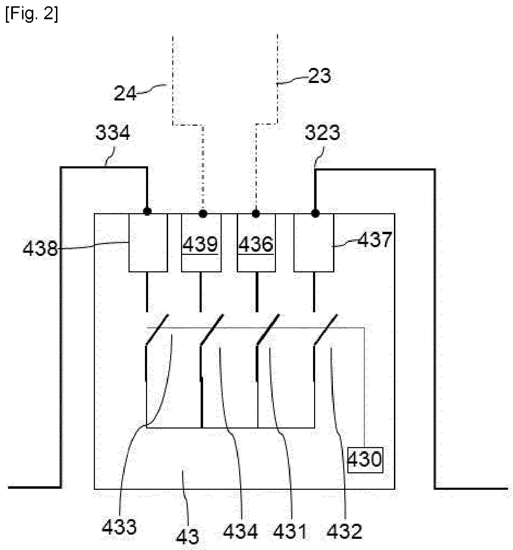

L'infrastructure 1 comprend au moins un élément d'interconnexion sous-marin 43, positionné au niveau d'un fond marin 9. L'élément d'interconnexion 43 repose typiquement à plusieurs dizaines ou plusieurs centaines de mètres sous le niveau de l'étendue d'eau (typiquement le niveau de la mer). L'élément d'interconnexion 43 est illustré de façon plus détaillée en référence à la figure 2.

Un câble électrique sous-marin 23 présente une première extrémité connectée à l'éolienne marine 13 et une deuxième extrémité positionnée au niveau du fond marin 9. La deuxième extrémité du câble 23 est connectée à une interface d'entrée de puissance électrique 436 de l'élément d'interconnexion 43. Le câble électrique 23 est typiquement de type triphasé.

Ce câble électrique 23 est donc destiné à subir des mouvements liés aux déplacements de l'éolienne marine 13 avec la marée ou la houle. Un tel câble électrique 23 sera désigné par la suite par le terme câble dynamique, correspondant à un câble soumis en fonctionnement normal à des sollicitations mécaniques externes et variables, lui imposant des flexions variables. Un tel câble dynamique est connu en soi et conçu pour résister au mieux à la fatigue liée à de telles flexions variables, et configuré pour permettre des flexions avec une amplitude suffisante pour éviter sa rupture.

L'élément d'interconnexion 43 comporte par ailleurs une interface d'entrée de puissance électrique 438. Cette interface d'entrée 438 est connectée à un câble électrique 334. Le câble électrique 334 est par ailleurs connecté à un autre élément d'interconnexion 44 détaillé par la suite. Le câble électrique 334 est destiné à conduire de la puissance électrique provenant de l'élément d'interconnexion 44 vers l'élément d'interconnexion 43. Les extrémités du câble électrique 334 sont positionnées au niveau du fond marin 9. De façon générale, le corps du câble électrique 334 reposera sur le fond marin 9 et pourra être partiellement enfoui ou protégé des dommages externes (par exemple par un matelas de béton, l'utilisation de coquilles de fonte, ou un empilement de rochers). Un tel câble est donc prévu pour ne pas être soumis à des sollicitations mécaniques variables en fonctionnement normal. Un tel câble est destiné à conserver sa courbure une fois déposé sur le fond marin 9. Un tel câble sera donc par la suite désigné par le terme câble statique. Un tel câble statique est connu en soi et conçu pour présenter une flexion la plus réduite possible afin de protéger les éléments conducteurs qu'il renferme.

L'élément d'interconnexion 43 comporte par ailleurs une interface de sortie de puissance électrique 437. Cette interface de sortie 437 est connectée à un câble électrique 323. Le câble électrique 323 est par ailleurs connecté à un autre élément d'interconnexion 42 détaillé par la suite. Le câble électrique 323 est destiné à conduire de la puissance électrique provenant de l'élément d'interconnexion 43 vers l'élément d'interconnexion 42. Les extrémités du câble électrique 323 sont positionnées au niveau du fond marin 9. Le câble électrique 323 est ainsi un câble statique.

L'élément d'interconnexion sous-marin 43 comprend en outre un interrupteur 431 (typiquement un disjoncteur ou un sectionneur de type commandé ou à commande manuelle) configuré pour sélectivement connecter et déconnecter le câble électrique 23 des câbles électriques 323 et 334. Ainsi, l'interrupteur 431 permet de déconnecter l'éolienne marine 13 de la chaine de transmission de puissance électrique à destination du réseau électrique, pour faire face à un défaut ou permettre des opérations de maintenance.

Ainsi, une infrastructure 1 selon l'invention permet de transmettre de l'énergie électrique d'une éolienne marine à destination du réseau électrique par l'intermédiaire d'un unique câble dynamique au lieu de deux câbles dynamiques, ce qui permet de réduire le coût global de cette infrastructure 1. De plus, l'intégration d'un interrupteur 431 dans l'élément d'interconnexion 43 permet d'isoler l'éolienne marine 13 de la chaine de transmission de puissance électrique en cas de défaut.

Avantageusement, l'élément d'interconnexion sous-marin 43 comprend un boîtier étanche, dans lequel l'interrupteur 431 est logé, afin de le protéger des agressions du milieu aqueux, en particulier en présence d'eau salée.

Avantageusement, les interfaces de connexion 436, 437 et 438 sont conçues pour être étanches afin de protéger les connexions électriques des câbles électriques 23, 323 et 334 des agressions du milieu aqueux.

L'élément d'interconnexion 43 correspond à une variante avantageuse, permettant de collecter le courant de plusieurs éoliennes marines. Ainsi, l'élément d'interconnexion 43 comporte une autre interface d'entrée 439 de puissance électrique. L'infrastructure 1 comprend une autre éolienne marine 14 montée sur un corps flottant et un câble dynamique sous-marin 24. Le câble 24 a une première extrémité connectée en surface à l'éolienne 14 et une deuxième extrémité connectée à l'interface d'entrée 439.

L'élément d'interconnexion 43 comprend en outre un interrupteur 434 configuré pour sélectivement connecter et déconnecter le câble électrique 24 des câbles électriques 323 et 334. Ainsi, plusieurs éoliennes marines peuvent être raccordées par un même élément d'interconnexion 43 à la chaine de conduction de courant à destination du réseau électrique.

Par ailleurs, l'élément d'interconnexion 43 comporte avantageusement des interrupteurs 432 et 433. L'interrupteur 432 est configuré pour sélectivement connecter et déconnecter le câble électrique 323 avec un interrupteur 433, l'interrupteur 433 étant configuré pour sélectivement connecter et déconnecter le câble électrique 334 avec l'interrupteur 432. Avec une telle configuration, le courant transmis par l'intermédiaire de l'élément d'interconnexion 43 ou provenant de l'élément d'interconnexion 44 peut sélectivement être interrompu en cas de défaut.

L'ouverture et la fermeture des interrupteurs 431 à 434 peut être commandée par un circuit de commande 430, sur la base de mesures électriques locales ou sur la base d'informations de signalisation reçues par ce circuit de commande 430. L'ouverture et la fermeture des interrupteurs 431 à 434 peut également être réalisée manuellement pour augmenter la fiabilité en limitant les risques de défaillance.

Avantageusement, l'infrastructure 1 comprend des capteurs de tension et/ou d'intensité, ou des capteurs de détection de présence d'eau au niveau de chaque élément d'interconnexion sous-marin, en vue de détecter des défauts et commander ou mettre en œuvre une ouverture des interrupteurs correspondants.

Comme mentionné précédemment, l'infrastructure 1 comprend en outre un élément d'interconnexion sous-marin 42 positionné au niveau du fond marin 9. L'éolienne marine 12 est connectée à l'élément d'interconnexion 42 par l'intermédiaire d'un câble dynamique 22 et d'une interface d'entrée de puissance. L'élément d'interconnexion 42 comporte par ailleurs une interface d'entrée de puissance connectée au câble statique 323. L'élément d'interconnexion 42 comporte en outre une interface de sortie de puissance connectée à un câble statique 312, dont les extrémités sont positionnées au niveau du fond marin 9.

L'élément d'interconnexion 42 comporte par ailleurs un interrupteur 421, configuré pour sélectivement connecter et déconnecter le câble électrique 22 des câbles électriques 312 et 323. L'élément d'interconnexion 42 comporte par ailleurs avantageusement des interrupteurs 422 et 423. L'interrupteur 422 est configuré pour sélectivement connecter et déconnecter le câble électrique 312 avec l'interrupteur 423, l'interrupteur 423 étant configuré pour sélectivement connecter et déconnecter le câble électrique 323 avec l'interrupteur 422. Avec une telle configuration, le courant transmis par l'intermédiaire de l'élément d'interconnexion 42 (notamment celui provenant de l'élément d'interconnexion 43) peut sélectivement être interrompu en cas de défaut.

Pour mieux illustrer un exemple de chaine de transmission de puissance dans le contexte d'une ferme d'éoliennes marines, l'infrastructure illustrée comprend en outre un élément d'interconnexion 41 et un élément d'interconnexion 44.

L'élément d'interconnexion sous-marin 41 est positionné au niveau du fond marin 9. L'éolienne marine 11 est connectée à l'élément d'interconnexion 41 par l'intermédiaire d'un câble dynamique 21 et d'une interface d'entrée de puissance. L'élément d'interconnexion 41 comporte par ailleurs une interface d'entrée de puissance connectée au câble statique 312. L'élément d'interconnexion 41 comporte en outre une interface de sortie de puissance connectée à un câble statique 301, dont une extrémité est positionnée au niveau du fond marin 9. Le câble statique 301 est par ailleurs connecté au poste de connexion 10.

L'élément d'interconnexion 41 comporte par ailleurs un interrupteur 411, configuré pour sélectivement déconnecter et déconnecter le câble électrique 21 des câbles électriques 301 et 312. L'élément d'interconnexion 41 comporte par ailleurs avantageusement des interrupteurs 412 et 413. L'interrupteur 412 est configuré pour sélectivement connecter et déconnecter le câble électrique 301 avec l'interrupteur 413, l'interrupteur 413 étant configuré pour sélectivement connecter et déconnecter le câble électrique 312 avec l'interrupteur 412. Avec une telle configuration, le courant transmis par l'intermédiaire de l'élément d'interconnexion 41 ou provenant de l'élément d'interconnexion 42 peut sélectivement être interrompu en cas de défaut.

L'élément d'interconnexion sous-marin 44 est positionné au niveau du fond marin 9. L'éolienne marine 15 est connectée à l'élément d'interconnexion 44 par l'intermédiaire d'un câble dynamique 25 et d'une interface d'entrée de puissance. L'élément d'interconnexion 44 comporte en outre une interface de sortie de puissance connectée à un câble statique 334. L'éolienne marine 16 est connectée à l'élément d'interconnexion 44 par l'intermédiaire d'un câble dynamique 26 et d'une interface d'entrée de puissance.

L'élément d'interconnexion 44 comporte par ailleurs un interrupteur 441, configuré pour sélectivement déconnecter et déconnecter le câble électrique 25 du câble électrique 334. L'élément d'interconnexion 44 comporte par ailleurs avantageusement des interrupteurs 442 et 443. L'interrupteur 443 est configuré pour sélectivement connecter et déconnecter le câble électrique 26 avec l'interrupteur 441. L'interrupteur 442 est configuré pour sélectivement connecter et déconnecter le câble électrique 334 de l'interrupteur 443.

L'infrastructure 1 est avantageusement configurée pour que chaque éolienne marine dispose d'un interrupteur en local. Ainsi, l'éolienne marine 11 dispose d'un interrupteur 111 pour sélectivement la connecter et la déconnecter du câble électrique 21, l'éolienne marine 12 dispose d'un interrupteur 121 pour sélectivement la connecter et la déconnecter du câble électrique 22, l'éolienne marine 13 dispose d'un interrupteur 131 pour sélectivement la connecter et la déconnecter du câble électrique 23, l'éolienne marine 14 dispose d'un interrupteur 141 pour sélectivement la connecter et la déconnecter du câble électrique 24, l'éolienne marine 15 dispose d'un interrupteur 151 pour sélectivement la connecter et la déconnecter du câble électrique 25, et l'éolienne marine 16 dispose d'un interrupteur 161 pour sélectivement la connecter et la déconnecter du câble électrique 26. De façon similaire, le convertisseur 10 est muni d'un interrupteur 101 pour sélectivement le connecter et le déconnecter du câble électrique 301.

Avantageusement, chaque élément d'interconnexion dispose d'un circuit de commande dédié pour commander ses interrupteurs. Ainsi, l'élément d'interconnexion 41 comporte un circuit de commande 410, l'élément d'interconnexion 42 comporte un circuit de commande 420, et l'élément d'interconnexion 44 comporte un circuit de commande 440.

L'infrastructure 1 dispose avantageusement d'un système de commande configuré pour mettre en œuvre différents procédés de gestion de défauts.

Par la suite, les notions d'amont et d'aval correspondront au sens de transmission de la puissance électrique, le convertisseur ou le transformateur 10 étant par exemple considéré comme en aval des éléments d'interconnexion 41 à 44.

En particulier, le procédé de commande peut être mis en œuvre afin de gérer un défaut sur une des lignes dynamiques. Dans un tel procédé, on détermine la présence d'un défaut par tout moyen approprié. Après la détermination de la présence d'un défaut, on ouvre l'ensemble des interrupteurs interposés entre les machines électriques et les turbines des éoliennes marines 11 à 16. On peut également ouvrir l'interrupteur 101, connectant le convertisseur 10 aux éléments d'interconnexion 41 à 44. On peut également ouvrir les interrupteurs connectant les câbles dynamiques 21 à 26 aux éléments d'interconnexion 41 à 44.

On identifie ensuite la localisation du défaut entre une des éoliennes marines et son élément d'interconnexion. Pour l'éolienne marine pour laquelle un défaut a été identifié, on commande l'interrupteur de son élément d'interconnexion connectant celui-ci à sa ligne dynamique pour que cet interrupteur soit à l'état ouvert. Pour chaque autre éolienne marine pour laquelle un défaut n'a pas été identifié, on commande l'interrupteur respectif de son élément d'interconnexion connectant celui-ci à sa ligne dynamique pour que cet interrupteur soit à l'état fermé. Pour chaque autre éolienne marine pour laquelle un défaut n'a pas été identifié, on commande l'interrupteur respectif interposé entre sa machine électrique et son câble dynamique à l'état fermé. On ferme ou on maintient fermé l'interrupteur 101 connectant le convertisseur 10 aux éléments d'interconnexion 41 à 44. La production d'électricité peut alors reprendre en ayant isolé l'éolienne marine dont le câble dynamique est en défaut.

Par ailleurs, le procédé de commande peut être mis en œuvre afin de gérer un défaut sur une des lignes statiques ou dans un élément d'interconnexion, en particulier si les interrupteurs des éléments d'interconnexion 41 à 44 sont des sectionneurs. Dans un tel procédé, on détermine la présence d'un défaut par tout moyen approprié. Après la détermination de la présence d'un défaut, on ouvre les interrupteurs connectant les éoliennes marines 11 à 16 aux câbles 21 à 26. On ouvre également l'interrupteur 101 connectant le convertisseur 10 aux éléments d'interconnexion 41 à 44.

On identifie ensuite la localisation du défaut sur un câble statique entre deux éléments d'interconnexion adjacents ou à l'intérieur d'un élément d'interconnexion. Ainsi, après avoir déterminé qu'un défaut était localisé sur un câble statique ou dans un élément d'interconnexion, L'interrupteur de l'interface d'entrée de puissance positionné en aval est ouvert, et les interrupteurs des interfaces d'entrée/sortie de puissance des éléments d'interconnexion positionnés en aval sont fermés. On ferme l'interrupteur 101 connectant le convertisseur 10 aux éléments d'interconnexion 41 à 44. La production d'électricité peut alors reprendre en ayant isolé la zone en amont du câble statique en défaut.

Par exemple, après localisation du défaut au niveau du câble statique 323, l'interrupteur 423 est maintenu ouvert après la localisation du défaut. Les interrupteurs 131, 141, 151 et 161 sont également maintenus ouverts. Les interrupteurs 101, 111, 121, 421, 422, 411, 412 et 413 sont maintenus fermés.

Selon un autre exemple, après localisation du défaut au niveau de l'élément d'interconnexion 43, l'interrupteur 423 est maintenu ouvert après la localisation du défaut. Les interrupteurs 131, 141, 151 et 161 sont également maintenus ouverts. Les interrupteurs 101, 111, 121, 421, 422, 411, 412 et 413 sont maintenus fermés.

## Revendications

1. Infrastructure (1) de connexion d'éoliennes marines (11, 12, 13, 14, 15, 16) à un poste de connexion (10) à un réseau électrique, l'infrastructure comprend :
- une première éolienne marine (13) montée sur un corps flottant ;
- un premier câble électrique sous-marin (23) présentant une première extrémité connectée à la première éolienne marine (13) et une deuxième extrémité positionnée au niveau d'un fond marin (9) **caractérisée en ce que** l'infrastructure comprend:
- des deuxième et troisième câbles électriques (323, 334) sous-marins présentant chacun des extrémités positionnées au niveau d'un fond marin (9) ;
- un premier élément d'interconnexion sous-marin (43) positionné au niveau d'un fond marin (9), comprenant une interface de sortie (437) de puissance électrique connectée au deuxième câble électrique (323), une interface d'entrée (438) de puissance électrique connectée au troisième câble électrique (334), une interface d'entrée (436) de puissance électrique connectée à la deuxième extrémité du premier câble électrique (23), le premier élément d'interconnexion sous-marin (43) comprenant un premier interrupteur (431) configuré pour sélectivement déconnecter et déconnecter le premier câble électrique (23) des deuxième et troisième câbles électriques (323, 334).

2. Infrastructure (1) selon la revendication 1, dans laquelle ledit premier élément d'interconnexion sous-marin (43) comprend un boîtier étanche, dans lequel ledit premier interrupteur (431) est logé.

3. Infrastructure (1) selon la revendication 1 ou 2, dans laquelle ledit premier élément d'interconnexion sous-marin (43) comprend en outre des deuxième et troisième interrupteurs (432, 433), le deuxième interrupteur (432) étant configuré pour sélectivement connecter et déconnecter le deuxième câble électrique (323) avec le troisième interrupteur, le troisième interrupteur (433) étant configuré pour sélectivement connecter et déconnecter le troisième câble électrique (334) avec le deuxième interrupteur.

4. Infrastructure (1) selon l'une quelconque des revendications précédentes, comprenant en outre :
- une deuxième éolienne marine (14) montée sur un corps flottant ;
- un quatrième câble électrique sous-marin (24) présentant une première extrémité connectée à la deuxième éolienne marine (14) et une deuxième extrémité positionnée au niveau d'un fond marin (9) ;
- dans laquelle ledit premier élément d'interconnexion sous-marin (43) comprend en outre :
- une interface d'entrée (439) de puissance électrique connectée à la deuxième extrémité du quatrième câble électrique (24) ;
- un quatrième interrupteur (434) configuré pour sélectivement connecter et déconnecter le quatrième câble électrique (24) des deuxième et troisième câbles électriques (323, 334).

5. Infrastructure (1) selon l'une quelconque des revendications précédentes, dans laquelle ledit deuxième câble électrique (323) est interconnecté avec un convertisseur ou un transformateur (10).

6. Infrastructure (1) selon l'une quelconque des revendications précédentes, comprenant en outre :
- une troisième éolienne marine (12) montée sur un corps flottant ;
- un cinquième câble électrique sous-marin (22) présentant une première extrémité connectée à la troisième éolienne marine (12) et une deuxième extrémité positionnée au niveau d'un fond marin (9) ;
- un sixième câble électrique (312) sous-marin présentant des extrémités positionnées au niveau d'un fond marin (9) ;
- un deuxième élément d'interconnexion sous-marin (42) positionné au niveau d'un fond marin (9), comprenant une interface de sortie de puissance électrique connectée au sixième câble électrique (312), une interface d'entrée de puissance électrique connectée au deuxième câble électrique (323), une interface d'entrée de puissance électrique connectée à la deuxième extrémité du cinquième câble électrique (22), le deuxième élément d'interconnexion sous-marin (42) comprenant un cinquième interrupteur (421) configuré pour sélectivement déconnecter et déconnecter le cinquième câble électrique (22) des deuxième et sixième câbles électriques (323, 312).

7. Infrastructure (1) selon la revendication 6, dans laquelle la première éolienne marine (13) comprend une machine électrique et un sixième interrupteur (131), le sixième interrupteur (131) étant configuré pour sélectivement déconnecter la machine électrique de la première extrémité du premier câble électrique (23), et dans laquelle la troisième éolienne marine (12) comprend une machine électrique et un septième interrupteur (121), le septième interrupteur (121) étant configuré pour sélectivement déconnecter la machine électrique de la première extrémité du cinquième câble électrique (22).

8. Infrastructure (1) selon l'une quelconque des revendications précédentes, comprenant un système de commande configuré pour déterminer la présence d'un défaut, configuré pour ouvrir un interrupteur entre la première éolienne marine (13) et les deuxième et troisième câbles électriques (323, 334) lors de la détermination de la présence d'un défaut.

9. Procédé de gestion de défaut dans une infrastructure (1) selon les revendications 5, 7 et 8, dans lequel on détermine la présence d'un défaut, on ouvre les sixième et septième interrupteurs (131, 121) et un dixième interrupteur (101) interconnectant ledit deuxième câble électrique (323) avec ledit convertisseur ou transformateur (10) après la détermination de la présence d'un défaut, on identifie la localisation d'un défaut entre une desdites éoliennes marine et son élément d'interconnexion, et les premier (431), sixième (131) et dixième (101) interrupteurs sont commandés pour être à l'état fermé et le cinquième interrupteur (421) est commandé pour être à l'état ouvert si le défaut est localisé entre la troisième éolienne marine (12) et le deuxième élément d'interconnexion (42), et les cinquième, septième et dixième (101) interrupteurs sont commandés pour être à l'état fermé et le premier interrupteur (431) est commandé pour être à l'état ouvert si le défaut est localisé entre la première éolienne marine (13) et le premier élément d'interconnexion (43).

10. Procédé de gestion de défaut dans une infrastructure (1) selon les revendications 5, 6 et 7 et comprenant en outre un huitième interrupteur (423) configuré pour sélectivement connecter et déconnecter le deuxième câble électrique (323) avec le cinquième interrupteur (421) et un neuvième interrupteur (422) configuré pour sélectivement connecter et déconnecter le sixième câble électrique (312) avec le huitième interrupteur (423), dans lequel on détermine la présence d'un défaut, on ouvre les sixième et septième interrupteurs (131, 121) et un dixième interrupteur (101) interconnectant ledit deuxième câble électrique (323) avec ledit convertisseur ou transformateur (10) après la détermination de la présence d'un défaut, on identifie la localisation d'un défaut entre les deuxième et huitième interrupteurs (432, 423) ou au niveau du premier élément d'interconnexion (43) , on maintient ouverts les sixième (131) et huitième interrupteurs (423) ouverts après l'identification de la localisation du défaut.

## Patentansprüche

1. Infrastruktur (1) zum Verbinden von Offshore-Windkraftanlagen (11, 12, 13, 14, 15, 16) mit einer Anschlussstation (10) eines Stromnetzes, wobei die Infrastruktur Folgendes umfasst:
- eine erste Offshore-Windkraftanlage (13), die auf einem Schwimmkörper montiert ist;
- ein erstes Unterwasserstromkabel (23), das ein erstes Ende aufweist, das mit der ersten Offshore-Windkraftanlage (13) verbunden ist, und ein zweites Ende, das auf einem Meeresboden (9) positioniert ist; **dadurch gekennzeichnet, dass** die Infrastruktur Folgendes umfasst:
- ein zweites und ein drittes Unterwasserstromkabel (323, 334), die jeweils Enden aufweisen, die auf einem Meeresboden (9) positioniert sind;
- ein erstes Unterwasser-Verbindungselement (43), das auf einem Meeresboden (9) positioniert ist, das eine Ausgangsschnittstelle (437) für elektrische Leistung umfasst, die mit dem zweiten Stromkabel (323) verbunden ist, eine Eingangsschnittstelle (438) für elektrische Leistung, die mit dem dritten Stromkabel (334) verbunden ist, eine Eingangsschnittstelle (436) für elektrische Leistung, die mit dem zweiten Ende des ersten Stromkabels (23) verbunden ist, wobei das erste Unterwasser-Verbindungselement (43) einen ersten Schalter (431) umfasst, der dazu konfiguriert ist, das erste Stromkabel (23) wahlweise mit dem zweiten und dem dritten Stromkabel (323, 334) zu verbinden und von diesen zu trennen.

2. Infrastruktur (1) nach Anspruch 1, wobei das erste Unterwasser-Verbindungselement (43) ein dichtes Gehäuse umfasst, in dem der erste Schalter (431) untergebracht ist.

3. Infrastruktur (1) nach Anspruch 1 oder 2, wobei das erste Unterwasser-Verbindungselement (43) außerdem einen zweiten und einen dritten Schalter (432, 433) umfasst, wobei der zweite Schalter (432) dazu konfiguriert ist, wahlweise das zweite Stromkabel (323) mit dem dritten Schalter zu verbinden und davon zu trennen, wobei der dritte Schalter (433) dazu konfiguriert ist, wahlweise das dritte Stromkabel (334) mit dem zweiten Schalter zu verbinden und davon zu trennen.

4. Infrastruktur (1) nach einem der vorstehenden Ansprüche, die außerdem Folgendes umfasst:
- eine zweite Offshore-Windkraftanlage (14), die auf einem Schwimmkörper montiert ist;
- ein viertes Unterwasserstromkabel (24), das ein erstes Ende aufweist, das mit der zweiten Offshore-Windkraftanlage (14) verbunden ist, und ein zweites Ende, das auf einem Meeresboden (9) positioniert ist;
- wobei das erste Unterwasser-Verbindungselement (43) außerdem Folgendes umfasst:
- eine Eingangsschnittstelle (439) für elektrische Leistung, die mit dem zweiten Ende des vierten Stromkabels (24) verbunden ist;
- einen vierten Schalter (434), der dazu konfiguriert ist, wahlweise das vierte Stromkabel (24) des zweiten und des dritten Stromkabels (323, 334) zu verbinden und zu trennen.

5. Infrastruktur (1) nach einem der vorstehenden Ansprüche, wobei das zweite Stromkabel (323) mit einem Wandler oder einem Transformator (10) verbunden ist.

6. Infrastruktur (1) nach einem der vorstehenden Ansprüche, die außerdem Folgendes umfasst:
- eine dritte Offshore-Windkraftanlage (12), die auf einem Schwimmkörper montiert ist;
- ein fünftes Unterwasserstromkabel (22), das ein erstes Ende aufweist, das mit der dritten Offshore-Windkraftanlage (12) verbunden ist, und ein zweites Ende, das auf einem Meeresboden (9) positioniert ist;
- ein sechstes Stromkabel (312), das Enden aufweist, die auf einem Meeresboden (9) positioniert sind;
- ein zweites Unterwasser-Verbindungselement (42), das auf einem Meeresboden (9) positioniert ist, das eine Ausgangsschnittstelle für elektrische Leistung umfasst, die mit dem sechsten Stromkabel (312) verbunden ist, eine Eingangsschnittstelle für elektrische Leistung, die mit dem zweiten Stromkabel (323) verbunden ist, eine Eingangsschnittstelle für elektrische Leistung, die mit dem zweiten Ende des fünften Stromkabels (22) verbunden ist, wobei das zweite Unterwasser-Verbindungselement (42) einen fünften Schalter (421) umfasst, der dazu konfiguriert ist, das fünfte Stromkabel (22) wahlweise mit dem zweiten und dem sechsten Stromkabel (323, 312) zu verbinden und von diesen zu trennen.

7. Infrastruktur (1) nach Anspruch 6, wobei die erste Offshore-Windkraftanlage (13) eine elektrische Maschine und einen sechsten Schalter (131) umfasst, wobei der sechste Schalter (131) dazu konfiguriert ist, wahlweise die elektrische Maschine von dem ersten Ende des ersten Stromkabels (23) zu trennen, und wobei die dritte Offshore-Windkraftanlage (12) eine elektrische Maschine und einen siebten Schalter (121) umfasst, wobei der siebte Schalter (121) dazu konfiguriert ist, wahlweise die elektrische Maschine von dem ersten Ende des fünften Stromkabels (22) zu trennen.

8. Infrastruktur (1) nach einem der vorstehenden Ansprüche, die ein Steuersystem umfasst, das dazu konfiguriert ist, das Vorliegen eines Fehlers zu bestimmen, das dazu konfiguriert ist, einen Schalter zwischen der ersten Offshore-Windkraftanlage (13) und dem zweiten und dem dritten Stromkabel (323, 334) beim Bestimmen des Vorliegens eines Fehlers zu öffnen.

9. Fehlerverwaltungsverfahren in einer Infrastruktur (1) nach den Ansprüchen 5, 7 und 8, wobei das Vorliegen eines Fehlers bestimmt wird, der sechste und siebte Schalter (131, 121) und ein zehnter Schalter (101), die das zweite Stromkabel (323) mit dem Wandler oder Transformator (10) verbinden, nach dem Bestimmen des Vorliegens eines Fehlers geöffnet werden, der Ort eines Fehlers zwischen einer der Offshore-Windkraftanlage und ihrem Verbindungselement identifiziert werden, und der erste (431), der sechste (131) und der zehnte (101) Schalter gesteuert werden, um sich im geschlossenen Zustand zu befinden, und der fünfte Schalter (421) gesteuert wird, um sich im offenen Zustand zu befinden, wenn der Fehler zwischen der dritten Offshore-Windkraftanlage (12) und dem zweiten Verbindungselement (42) liegt, und der fünfte, siebte und zehnte (101) Schalter gesteuert werden, um sich im geschlossenen Zustand zu befinden, und der erste Schalter (431) gesteuert wird, um sich im offenen Zustand zu befinden, wenn der Fehler zwischen der ersten Offshore-Windkraftanlage (13) und dem ersten Verbindungselement (43) liegt.

10. Fehlerverwaltungsverfahren in einer Infrastruktur (1) nach den Ansprüchen 5, 6 und 7, die außerdem einen achten Schalter (423) umfasst, der dazu konfiguriert ist, wahlweise das zweite Stromkabel (323) mit dem fünften Schalter (421) zu verbinden und davon zu trennen, und einen neunten Schalter (422), der dazu konfiguriert ist, wahlweise das sechste Stromkabel (312) mit dem achten Schalter (423) zu verbinden und davon zu trennen, wobei das Vorliegen eines Fehlers bestimmt wird, der sechste und der siebte Schalter (131, 121) und ein zehnter Schalter (101), die das zweite Stromkabel (323) mit dem Wandler oder Transformator (10) verwenden, nach dem Bestimmen des Vorliegens eines Fehlers geöffnet werden, der Ort eines Fehlers zwischen dem zweiten und dem achten Schalter (432, 423) oder im Bereich des ersten Verbindungselements (43) identifiziert wird, der sechste (131) und der achte Schalter (423), die nach der Identifizierung des Orts des Fehlers offen sind, offen gehalten werden.

## Claims

1. Infrastructure (1) for connecting offshore wind turbines (11, 12, 13, 14, 15, 16) to an electrical grid substation (10), wherein the infrastructure comprises:
- a first offshore wind turbine (13) mounted on a floating body;
- a first submarine power cable (23) with a first end connected to the first offshore wind turbine (13) and a second end located at a seabed (9);
**characterized in that** the infrastructure comprises:
- second and third submarine power cables (323, 334), each with ends located at a seabed (9);
- a first submarine interconnection item (43) located at a seabed (9), comprising a power outlet interface (437) connected to the second power cable (323), a power inlet interface (438) connected to the third power cable (334), a power inlet interface (436) connected to the second end of the first power cable (23), the first submarine interconnection item (43) comprising a first switch (431) configured to selectively connect and disconnect the first power cable (23) from the second and third power cables (323, 334).

2. Infrastructure (1) according to claim 1, wherein said first submarine interconnection item (43) comprises a watertight carter, in which said first switch (431) is located.

3. Infrastructure (1) according to claim 1 or 2, wherein said first submarine interconnection item (43) further comprises second and third switches (432, 433), the second switch (432) being configured to selectively connect and disconnect the second power cable (323) to the third switch, the third switch (433) being configured to selectively connect and disconnect the third power cable (334) to the second switch.

4. Infrastructure (1) according to any one of the previous claims, further comprising:
- a second offshore wind turbine (14) mounted on a floating body;
- a fourth submarine power cable (24) with a first end connected to the second offshore wind turbine (14) and a second end located at a seabed (9);
wherein said first submarine interconnection item (43) further comprises:
- a power inlet interface (439) connected to the second end of the fourth power cable (24);
- a fourth switch (434) configured to selectively connect and disconnect the fourth power cable (24) from the second and third power cables (323, 334).

5. Infrastructure (1) according to any one of the previous claims, wherein said second power cable (323) is interconnected to a converter or a transformer (10).

6. Infrastructure (1) according to any one of the previous claims, further comprising:
- a third offshore wind turbine (12) mounted on a floating body;
- a fifth submarine power cable (22) with a first end connected to the third offshore wind turbine (12) and a second end located at a seabed (9);
- a sixth submarine power cable (312) with ends located at a seabed (9);
- a second submarine interconnection item (42) located at a seabed (9), comprising a power outlet interface connected to the sixth power cable (312), a power inlet interface connected to the second power cable (323), a power inlet interface connected to the second end of the fifth power cable (22), the second submarine interconnection item (42) comprising a fifth switch (421) configured to selectively connect and disconnect the fifth power cable (22) from the second and sixth power cables (323, 312).

7. Infrastructure (1) according to claim 6, wherein the first offshore wind turbine (13) comprises an electrical machine and a sixth switch (131), the sixth switch (131) being configured to selectively disconnect the electrical machine from the first end of the first power cable (23), and wherein the third offshore wind turbine (12) comprises an electrical machine and a seventh switch (121), the seventh switch (121) being configured to selectively disconnect the electrical machine of the first end of the fifth power cable (22).

8. Infrastructure (1) according to any one of the previous claims, comprising a monitoring system configured to find a defect, configured to open a switch between the first offshore wind turbine (13) and the second and third power cables (323, 334) when finding a default.

9. Method to manage defaults in an infrastructure (1) according to claims 5, 7 and 8, wherein a default is found, the sixth and seventh switches (131, 121) are opened and a tenth switch (101) is opened that interconnects said second power cable (323) to said converter or transformer (10) after finding a default, the location of a default is identified between one of said offshore wind turbines and its interconnection item, and the first (431), sixth (131) and tenth (101) switches are monitored to the closed state while the fifth switch (421) is monitored to the open state if the default is located between the third offshore wind turbine (12) and the second interconnection item (42), and the fifth, seventh and tenth (101) switches are monitored to the closed state and the first switch (431) is monitored to the open state if the default is located between the first offshore wind turbine (13) and the first interconnection item (43).

10. Method to manage defaults in an infrastructure (1) according to claims 5, 6 and 7, and further comprising an eight switch (423) configured to selectively connect and disconnect the second power cable (323) to the fifth switch (421) and a ninth switch (422) configured to selectively connect and disconnect the sixth power cable (312) to the eight switch (423), wherein a default is found, the sixth and seventh switches (131, 121) are opened and a tenth switch (101) is opened that interconnects said second power cable (323) to said converter or transformer (10) after finding a default, the location of a default is identified between the second and eight switches (432, 423) or at the first interconnection item (43), the sixth (131) and eight (423) switches are kept open after identification of the location of the default.
